# EUROPEAN PATENT SPECIFICATION

(11) **EP 2 576 916 B1**
(45) Date of publication and mention of the grant of the patent: **12.04.2017**
(21) Application number: 10760656.8
(22) Date of filing: 21.09.2010
(51) Int. Cl.: E02D 27/42, F03D 1/00

(54) **FOUNDATION STRUCTURE FOR A WIND TURBINE**
GRÜNDUNG FÜR EINE WINDTURBINE
FONDATION D'UNE AÉOLIÈNNE

(30) Priority: 25.05.2010 EP 10163755
(43) Date of publication of application: 10.04.2013
(73) Proprietor: Siemens Aktiengesellschaft, 80333 München (DE)
(72) Inventor: STIESDAL, Henrik, DK-5000 Odense C (DK)
(86) International application number: PCT/EP2010/063909
(87) International publication number: WO 2011/147477

(56) References cited:
- EP-A2- 2 067 914
- EP-A2- 2 192 236
- KR-A- 20110 004 797

## Description

The present invention relates to a support structure for a wind turbine, comprising a plurality of connected construction members, such as basically known from EP 188 99 88 B1.

Support structures for offshore wind turbines have to cope with both wind and hydrodynamic loading including a highly complex dynamic behaviour from the wind turbine. In existent offshore wind turbine installations different foundations are common: Monopile foundations consist of a steel pile which is driven into the seabed. Gravity foundations consist of a large base constructed from either concrete or steel or a combination, which rests on the seabed. The wind turbine is dependent on gravity to remain erect. Tripod foundations consist of three legs comprising piles on each end which are driven into the seabed. This type is generally used at deeper depths. Each foundation has specific advantages in relation to water depths, materials used, design complexity and costs.

EP 1 867 790 A1 proposes a jacket type supporting structure for a wind turbine. The jacket structure consists of plural connected rods, which form a framework. In general a jacket structure is a steel structure where all parts are welded as three dimensional connections at central connection joints.

Common to these various types of support structures is that they are specially designed for each individual wind turbine and for each individual installation site, primarily due to varying water depths at the installation sites and to factors such as condition of the seabed. A tripod foundation comprises braces which are usually of different diameter and length dimensions for each construction. Jacket structures are normally made from steel tubes with a diameter typically 0.5 to 1.5 meters welded together. For tripod structures typically steel tubes are welded together which are 1 to 5 meters in diameter.

It is therefore an object of the present invention to provide a support structure for a wind turbine which is suitable for different installation types which does not lead to high design costs.

According to the present invention this object is achieved in the above defined support structure in that a construction member comprises a number of substantially identical interconnected elements.

Due to the substantially identical elements a modular structure is formed, whereby construction members with the desired length are made from plural identical elements. The use of a number of substantially identical or even totally identical elements leads to cost savings, because from the identical elements construction members can be composed which suit different installation sites, varying water depths and other individual factors. It is advantageous that it is not necessary to work out a new design for each individual support structure for a wind turbine, instead a support structure which fulfils specific requirements can be composed easily from the identical interconnected elements.

In the inventive support structure for a wind turbine it is preferred that a construction member is formed as a brace or a pile. Consequently support structures or the tripod type or jacket structures can be made as usual, whereby a brace or a pile comprises a number of substantially identical interconnected elements.

Preferably an element of the inventive support structure has a substantially cylindrical shape. Cylindrical elements can be interconnected easily, in particular when a holding means is provided for rigidly holding the elements together. The holding means fixes a number of identical elements so that a construction member is formed. This construction member can be used as a common brace or pile, therefore the inventive support structure can be applied to common support structures easily.

According to a first alternative of the support structure the holding means can be a wire penetrating the elements. Preferably the elements comprise a suitable wire passage through which the wire can be inserted. The wire ends must be locked in position by a suitable locking means and tension must be applied on the wire in order to make sure that the elements are secured.

According to a second embodiment of the support structure the holding means may be a rod, penetrating through a suitable aperture. Preferably the rod has threaded ends, so that a fixation can be realized with a washer end a nut.

In the inventive support structure it is particular preferred that the holding means is locked to the outer one of the interconnected elements.

According to a third alternative of the inventive support structure the holding means may comprise flanges on the elements which are bolted together. The use of flanges leads to reliable connections between interconnected elements, which form a construction member of the inventive support structure for a wind turbine.

An even better connection can be achieved when the elements of the inventive support structure are positive locking longitudinally and/or in circumferential direction. Positive locking ensures that forces are transferred from an element to neighbouring elements.

In order to form more complex support structures, e. g. a tripod or a jacket structure a joint element may be provided for connecting at least one brace to at least one pile. The joint element is used as a connector in order to bond or join plural construction members, in particular one or more brace and one or more pile together.

The inventive support structure for a wind turbine is particularly well suited for elements which are made substantially of steel and/or concrete. It is further possible to use concrete elements with prestressed steel rods.

Further the inventive support structure is particularly well suited for a tripod structure or a jacket structure.

The invention and its underlaying principle will be better understood when consideration is given to the following detailed description of preferred embodiments.

In the accompanying drawings:
- Fig. 1: shows a detail of a construction member of an inventive support structure for a wind turbine;
- Fig. 2: shows a detail of a construction member with a wire;
- Fig. 3: shows a construction member with a rod;
- Fig. 4: shows a construction member with flanges;
- Fig. 5: shows a joint element with plural connected construction members;
- Fig. 6: shows another embodiment of a joint element with plural construction members;
- Fig. 7: shows an inventive support structure in the form of a tripod;

- Fig. 8: shows another inventive support structure in the form of a tripod; and
- Fig. 9: shows another inventive support structure in the form of a tripod.

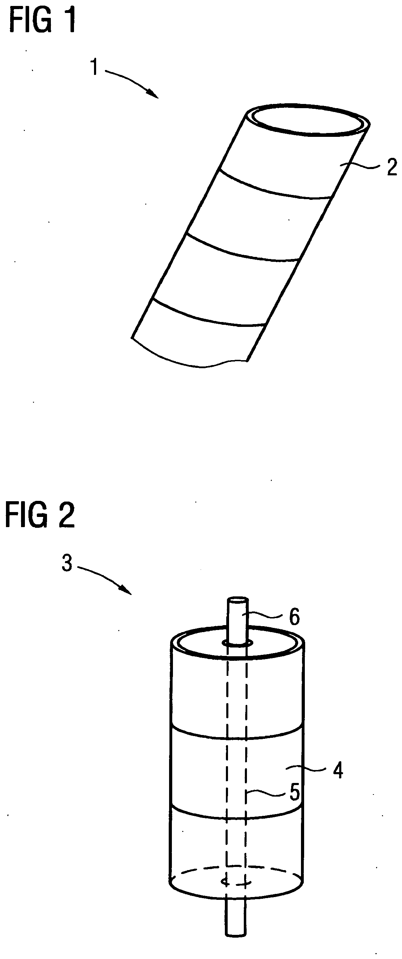

Fig. 1 shows a detail of a construction member of a support structure for a wind turbine. The construction member in the form of a brace 1 comprises a number of identical interconnected elements 2 in the form of tubes. Each element 2 is built of concrete with a desired diameter and a predetermined, identical length. The plural elements 2 are positive locking, whereby the transfer of forces is improved.

Fig. 2 shows a detail of a construction member with a wire. A brace 3 comprises a number of identical interconnected elements 4 which are made out of concrete. Each element 4 is provided with an axial passage 5, which is penetrated by a wire 6. A holding means (not shown) is used for locking the wire 6 to both outer elements 4 of the brace 3. The holding means exerts a pressure force on the elements 4 and locks them, so that forces are transferred between the elements 4.

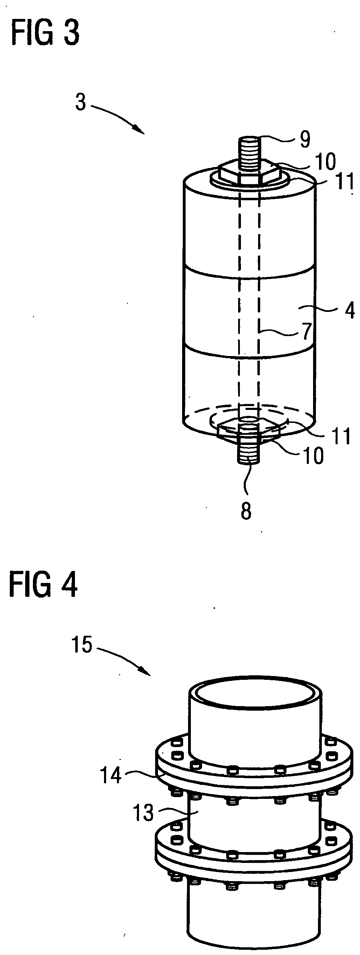

Fig. 3 shows another embodiment with interconnected elements 4, whereby the holding means is a rod 7 with threaded ends 8, 9. The rod 7 penetrates the elements 4. The holding means further comprises nuts 10 and washers 11 so that a rigid construction member in the form of a brace 12 is formed.

Fig. 4 shows a detail of a construction member with flanges. Each element 13 is provided with flanges 14 so that the flanges 14 of two elements 13 can be bolted together in order to form a brace 15.

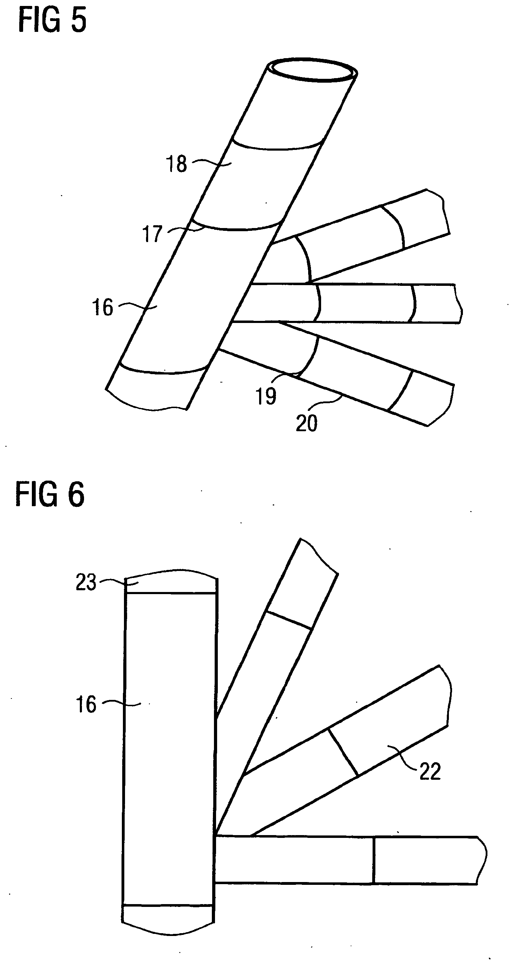

Fig. 5 shows a joint element with plural connected construction members. A joint element 16 is used as a standard connection element, it comprises openings 17 for the connection of tubular elements 18 and openings 19 for the connection of tubular elements 20. The diameter of the tubular elements 18 is larger than the diameter of the tubular elements 20. The connection between the joint element 16 and the tubular elements 18, 20 is e. g. effected by a rod with threaded ends so that a rigid connection is realized. The support structure comprises a large number of such joint elements so that a modulized construction is obtained. The use of a standard tubular element 18, 20 and standard joint elements 16 minimizes the design work, whereby reduced costs are achieved.

Fig. 6 shows another example of a joint element 21, to which three elements 22 are connected to. The elements 22 are tubular elements, further pile elements 23 with a larger diameter compared to the tubular elements 22 are connected to the joint 21. The tubular elements 22 form braces which are used throughout the support structure for the wind turbine.

All described elements can be made from steel or concrete, further prestressed concrete elements can be used, where prestressed rods are embedded into the concrete element.

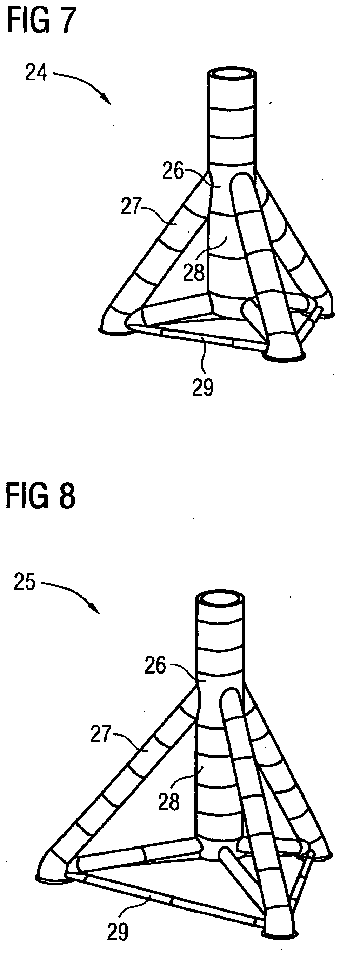

Fig. 7 and 8 show two embodiments of support structures in the form a tripod. Both tripod structures 24, 25 are constructed from similar elements, namely joint elements 26 and brace elements 27. Tripod 24, as shown in fig. 7, comprises modular elements which are precast concrete elements. Tripod 25, as shown in fig. 8, comprises modular elements which are steel elements. For tripod structure 24 three brace elements 27, two vertical elements 28 and one horizontal element 29, respectively, are used. However, with the same components different tripod support structures can be built, which differ only in the number of the components. In the embodiment of fig. 8 five brace elements 27, four vertical elements 28 and two horizontal elements 29 are used, respectively.

For tripod 24 in fig. 7 a wire is used as holding means, which holds the plural identical interconnected elements together, whereby the wire penetrates the elements.

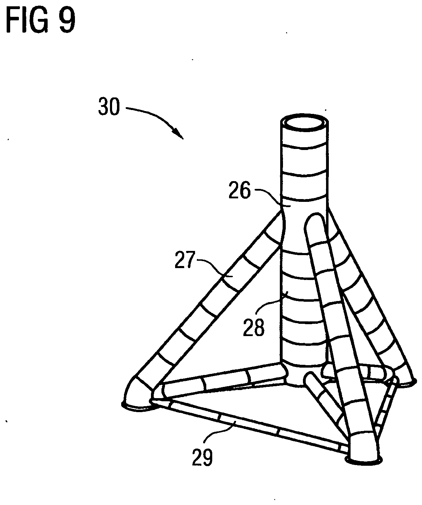

In the embodiment of fig. 9 a tripod 30 is shown comprising six brace elements 27, five vertical elements 28 and three horizontal elements 29, respectively. As shown in particular in fig. 7 to 9 various tripod structures can be built with a different number of components.

For tripod 25 as shown in fig. 8 the holding means comprises rigid rods with threaded ends, whereby washers and bolts are used as locking means in order to exert a pressure upon the braces and piles.

The support structures and their respective parts, which are described in this application may be built of elements with different lengths, e. g. one long element and one or more shorter elements. Hereby it is ensured that a brace or a pile can be built from a mimimal number of standard element lengths which in turn decreases production time, production costs and assembling time. The support structure comprises modular elements, which are easy to produce and the braces and piles can be designed in every desired length by adding a suitable plurality of modular elements. By building the support structure by modular elements it is ensured that the support structure is built from standardized elements which are easy to produce and easy to transport.

## Claims

1. A support structure for a wind turbine, comprising a plurality of connected construction members, **characterised in that** a construction member comprises a number of substantially identical interconnected elements (2, 4), whereby a holding means is provided for rigidly holding the elements (2, 4) together, and **in that** the holding means is a wire (6) penetrating the elements (2, 4) or a rod (7) penetrating the elements (2, 4).

2. A support structure according to claim 1, **characterised in that** a construction member is formed as a brace (12, 15) or a pile (23).

3. A support structure according to claim 1 or 2, **characterised in that** an element (2, 4) has a substantially cylindrical shape.

4. A support structure according to any of the preceding claims, **characterised in that** the holding means is locked to the outer ones of the interconnected elements (2, 4).

5. A support structure according to any of the preceding claims, **characterised in that** the elements (2, 4) are positive locking longitudinally and/or in circumferential direction.

6. A support structure according any of claims 2 to 5, **characterised in that** a joint element (16) is provided for connecting at least one brace to at least one pile.

7. A support structure according to any of the preceding claims, **characterised in that** an element (2, 4) is made substantially from steel and/or concrete.

8. A support structure according to any of the preceding claims, **characterised in that** it is a tripod (24, 25) or a jacket structure.

9. A support structure according to any of the preceding claims, **characterised in that** it is connected to a wind turbine tower on its top.

10. A support structure according to any of the preceding claims, **characterised in that** the rod (7) comprises threaded ends (8, 9).

## Patentansprüche

1. Tragstruktur für eine Windenergieanlage mit einer Vielzahl verbundener Konstruktionselemente, **dadurch gekennzeichnet, dass** ein Konstruktionselement eine Anzahl im Wesentlichen identischer, miteinander verbundener Elemente (2, 4) umfasst, wobei ein Haltemittel zum festen Zusammenhalten der Elemente (2, 4) bereitgestellt ist, und dass es sich bei dem Haltemittel um ein Seil (6) oder einen Stab (7) handelt, das/der durch die Elemente (2, 4) hindurchgeht.

2. Tragstruktur nach Anspruch 1, **dadurch gekennzeichnet, dass** ein Konstruktionselement als Strebe (12, 15) oder als Pfahl (23) ausgebildet ist.

3. Tragstruktur nach Anspruch 1 oder 2, **dadurch gekennzeichnet, dass** ein Element (2, 4) eine im Wesentlichen zylindrische Form aufweist.

4. Tragstruktur nach einem der vorhergehenden Ansprüche, **dadurch gekennzeichnet, dass** das Haltemittel mit den äußeren der miteinander verbundenen Elementen (2, 4) verriegelt ist.

5. Tragstruktur nach einem der vorhergehenden Ansprüche, **dadurch gekennzeichnet, dass** die Elemente (2, 4) in Längs- und/oder Umfangsrichtung formschlüssig sind.

6. Tragstruktur nach einem der Ansprüche 2 bis 5, **dadurch gekennzeichnet, dass** ein Verbindungselement (16) zum Verbinden mindestens einer Strebe mit mindestens einem Pfahl bereitgestellt ist.

7. Tragstruktur nach einem der vorhergehenden Ansprüche, **dadurch gekennzeichnet, dass** ein Element (2, 4) im Wesentlichen aus Stahl und/oder Beton hergestellt ist.

8. Tragstruktur nach einem der vorhergehenden Ansprüche, **dadurch gekennzeichnet, dass** es sich um eine Tripod- (24, 25) oder eine Jacket-Struktur handelt.

9. Tragstruktur nach einem der vorhergehenden Ansprüche, **dadurch gekennzeichnet, dass** sie mit einem auf ihr befindlichen Turm einer Windenergieanlage verbunden ist.

10. Tragstruktur nach einem der vorhergehenden Ansprüche, **dadurch gekennzeichnet, dass** der Stab (7) mit Gewinde versehene Enden (8, 9) umfasst.

## Revendications

1. Structure support pour une éolienne, comprenant une pluralité d'éléments de construction connectés, **caractérisée en ce qu'**un élément de construction comprend un certain nombre d'éléments (2, 4) interconnectés sensiblement identiques, dans laquelle un moyen de maintien est disposé pour maintenir rigidement les éléments (2, 4) ensemble, et **en ce que** le moyen de maintien est un câble (6) pénétrant dans les éléments (2, 4) ou une barre (7) pénétrant dans les éléments (2, 4).

2. Structure support selon la revendication 1, **caractérisée en ce qu'**un élément de construction est formé comme une jambe de force (12, 15) ou un pilier (23).

3. Structure support selon la revendication 1 ou 2, **caractérisée en ce qu'**un élément (2, 4) a une forme sensiblement cylindrique.

4. Structure support selon l'une quelconque des revendications précédentes, **caractérisée en ce que** le moyen de maintien est verrouillé sur ceux extérieurs des éléments (2, 4) interconnectés.

5. Structure support selon l'une quelconque des revendications précédentes, **caractérisée en ce que** les éléments (2, 4) sont en verrouillage positif longitudinalement et/ou dans le sens circonférentiel.

6. Structure support selon l'une quelconque des revendications 2 à 5, **caractérisée en ce qu'**un élément (16) de jonction est disposé pour connecter au moins une jambe de force à au moins un pilier.

7. Structure support selon l'une quelconque des revendications précédentes, **caractérisée en ce qu'**un élément (2, 4) est sensiblement constitué d'acier et/ou de béton.

8. Structure support selon l'une quelconque des revendications précédentes, **caractérisée en ce qu'**il s'agit d'un tripode (24, 25) ou d'une structure d'enveloppe.

9. Structure support selon l'une quelconque des revendications précédentes, **caractérisée en ce qu'**elle est connectée à une tour d'éolienne en son sommet.

10. Structure support selon l'une quelconque des revendications précédentes, **caractérisée en ce que** la barre (7) comprend des extrémités (8, 9) filetées.
